# EUROPEAN PATENT APPLICATION

(11) **EP 4 775 492 A1**
(43) Date of publication of application: **15.07.2026**
(21) Application number: 25461504.0
(22) Date of filing: 14.01.2025
(51) Int. Cl.: B64D 27/31, B64D 27/34, B64D 27/355, B64D 29/00, B64D 33/08

(54) **NACELLE**

(71) Applicant: UTC Aerospace Systems Wroclaw Sp. z o.o., 51-317 Wroclaw (PL)
(72) Inventor: ROSCISZEWSKI, Stanislaw, Wroclaw, 51-317 (PL); KRUCZEK, Grzegorz, Wroclaw, 51-317 (PL)
(74) Representative: Dehns

(57) **Abstract**

A nacelle (8) is provided which comprises: an external surface (22) extending from a front end (12) of the nacelle (8) to a rear end (16) of the nacelle; an air inlet opening (24) in the external surface (22); an exhaust opening (14); a flow passage (26) extending from the air inlet opening (24) to the exhaust opening (14); a heat exchanger (20) positioned in the flow passage (26); and an external spoiler (28) protruding beyond the external surface (22) and configured to direct air flowing around the nacelle (8) through the air inlet opening (24) and into the flow passage (26) so as to provide cooling air to the heat exchanger (20).

## Description

### TECHNICAL FIELD

The present disclosure relates to a nacelle, for example an aircraft nacelle configured to provide cooling air to a heat exchanger inside the nacelle.

### BACKGROUND

In some applications such as, for example, in the aerospace industry, there is a desire to reduce emissions generated during flight. One solution to this is to power aircraft with electric engines, for example powered by fuel cells. The use of such engines and fuel cells may result in significant heat generation such that there is a need to provide improved heat exchange systems for use in aircraft.

### SUMMARY

According to a first aspect of the disclosure, there is provided a nacelle comprising: an external surface extending from a front end of the nacelle to a rear end of the nacelle; an air inlet opening in the external surface; an exhaust opening; a flow passage extending from the air inlet opening to the exhaust opening; a heat exchanger positioned in the flow passage; and an external spoiler protruding beyond the external surface and configured to direct air flowing around the nacelle through the air inlet opening and into the flow passage so as to provide cooling air to the heat exchanger.

In any example of the disclosure, the external spoiler may be configured to provide a sufficient flow of cooling air to the heat exchanger for the required cooling.

In any example of the disclosure, the nacelle may comprise one or more internal spoilers positioned in the flow passage.

In any example of the disclosure, the nacelle may comprise a nacelle door positioned at the air inlet opening, wherein the nacelle door is moveable between an open position and a closed position.

In any example of the disclosure, an area of the air inlet opening may be larger when the nacelle door is in the open position than when the nacelle door is in the closed position.

In any example of the disclosure, the nacelle door may not fully cover the air inlet opening when the nacelle door is in the closed position.

In any example of the disclosure, the external spoiler may be configured to provide a sufficient flow of cooling air to the heat exchanger both when the nacelle door is in the closed position and when the nacelle door is in the open position.

In any example of the disclosure, the external spoiler may be configured to minimise an increase in drag exerted on the nacelle,

In any example of the disclosure, the external spoiler may be configured to cause an increase in drag exerted on the nacelle of less than 10%.

In any example of the disclosure, the nacelle may comprise comprising an engine positioned within the nacelle.

In any example of the disclosure, the engine may be an electric engine.

In any example of the disclosure, the heat exchanger may be configured to remove heat generated by the engine from the nacelle.

In any example of the disclosure, the nacelle may comprise a fuel cell, wherein the engine is powered by the fuel cell.

In any example of the disclosure, the heat exchanger may be configured to remove heat generated by the fuel cell from the nacelle.

In any example of the disclosure, the nacelle may comprise a plurality of the air inlet openings in the external surface; a plurality of the flow passages, each flow passage extending from a respective air inlet opening to the exhaust opening or to a respective exhaust opening; a plurality of the external spoilers each configured to direct air flowing around the nacelle through a respective air inlet opening and into the corresponding flow passage; and a plurality of heat exchangers, each heat exchanger positioned in a respective flow passage.

In any example of the disclosure, the plurality of air inlet openings may be formed in opposite sides of the nacelle; or the plurality of air inlet openings may be
axially adjacent to each other.

### BRIEF DESCRIPTION OF DRAWINGS

An example of the disclosure will now be described by way of example only and with reference to the accompanying drawings in which:
Figure 1 shows a schematic plan view of an aircraft according to an example of the disclosure;
Figure 2 shows a schematic side section view of a nacelle according to an example of the disclosure;
Figure 3 shows an isometric view of the exterior of part of a nacelle according to an example of the disclosure;
Figure 4 shows a 3 Dimensional model of the interior of part of a nacelle according to an example of the disclosure; and
Figure 5 shows a schematic side section view of one half of a nacelle according to an example of the disclosure.

### DETAILED DESCRIPTION

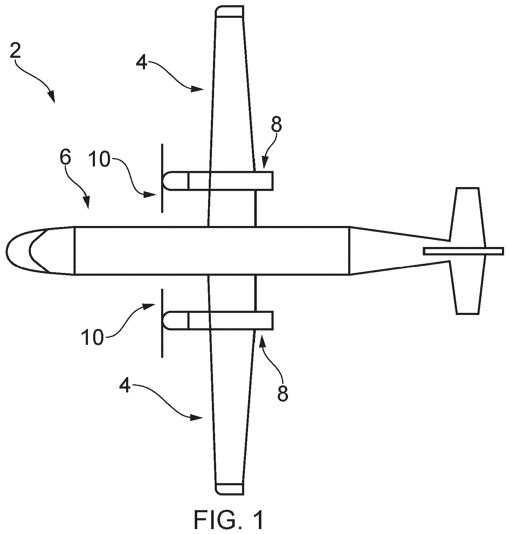

An aircraft 2 according to an example of the disclosure is shown in Figure 1. A typical aircraft 2 includes a wing 4 extending from either side of the fuselage 6. The aircraft 2 is driven by one or more engines mounted in nacelles. At least in some examples, a nacelle 8 housing an engine (not shown) is mounted to each wing 4. At least in some examples, the engines may be electrical engines powered by fuel cells. It will be understood however that the disclosure may be relevant also to other types of engine, including but not limited to gas turbine engines, and other types of power source, including but not limited to electric batteries. In any example, a propeller 10 may be provided at the front end of each nacelle 8, the propeller 10 being driven by the engine. In any example, a turbine rotor (not shown) driven by the engine may additionally or alternatively be provided and may be housed within the nacelle 8. In any example, the aircraft 2 and the nacelle 8 are configured such that air may flow from the front thereof towards the rear thereof. As is known in the art, a portion of air may be taken into the nacelle at a front end thereof so as to flow through the engine. Some air however will flow around the exterior of the nacelle 8 as is described in further detail below.

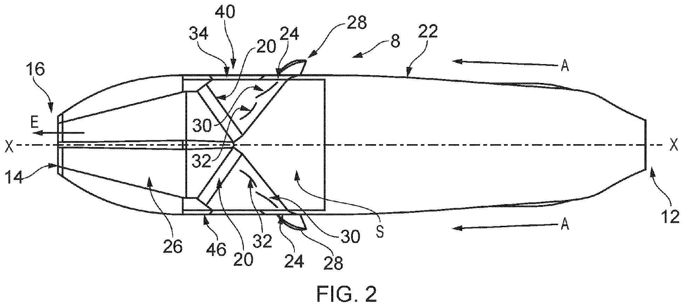

A nacelle 8 according to an example of the disclosure is shown in Figure 2. In the examples shown, a propeller (not shown in Figure 2) may be provided at the front end 12 of the nacelle 8. An exhaust opening 14 is provided, which may be located at the rear end 16 of the nacelle 8, through which air flow may be ejected to the atmosphere as shown by arrow E. The nacelle 8 extends along and, in some examples, is centred on a longitudinal axis X-X from the front end 12 to the rear end 16 thereof. The nacelle 8 has an external surface 22 which extends axially from the front end 12 to the rear end 16 thereof. In any example of the disclosure, the external surface 22 may be radially spaced from the longitudinal axis X-X such that an interior space S is formed inside the external surface 22 of the nacelle 8.

It will be understood that various components within the nacelle 8 which are not directly relevant to the disclosure are not shown in the drawings for the sake of clarity. Thus, for example, the engine which is housed within the nacelle 8 and which drives rotation of the propeller 10 and / or a turbine (not shown) is not shown in Figure 2 or the other drawings. Various parts of the nacelle 8 which are not directly relevant to the disclosure are greyed out completely, as shown for example by the right hand side of Figure 2.

In any example of the disclosure, a heat exchanger 20 is provided within the nacelle 8. The heat exchanger 20 is configured and positioned to reject heat generated within the nacelle 8 by flowing cooling air (coolant) over the heat exchanger 20 and then rejecting the cooling air to the atmosphere via the exhaust opening 14. In examples in which an electrical engine is used, for example an electrical engine powered by one or more fuel cells (not shown) located within the nacelle 8, a large amount of heat may be generated during operations. The heat exchanger 20 can be configured to remove heat generated by the engine from inside the nacelle 8. The heat exchanger 20 can alternatively or additionally be configured to remove heat generated by one or more fuel cells from inside the nacelle 8. The heat exchanger 20 can alternatively or additionally be configured to remove heat generated by other heat sources, such as power electronics for example, from inside the nacelle 8.

When the propeller and / or the turbine are operational, also when the aircraft 2 is moving, air will flow around the external surface 22 of the nacelle 8 in the direction shown by the arrows A in Figure 2.

As seen in Figures 2 to 4, an air inlet opening 24 is formed in the external surface 22 of the nacelle 8. The air inlet opening 24 may comprise an aperture extending through the external surface 22 and or an outer casing of the nacelle 8. The air inlet opening 24 may extend from an exterior of the nacelle 8 to the interior space S. The air inlet opening 24 allows air flowing around the external surface 22 of the nacelle 8 to enter the nacelle 8 to flow along a flow passage 26. The flow passage 26 may be connected to the air inlet opening 24. The flow passage 26 may be located within the interior space S. A heat exchanger 20 is located in the flow passage 26 such that the air flowing through the flow passage 26 flows over the heat exchanger 20 and so acts as a coolant for the heat exchanger 20 as described above. The flow passage 26 is connected to the exhaust opening 14, such that air flowing through the flow passage 26 is ejected to the atmosphere via the exhaust opening 14 after it has flown over the heat exchanger 20.

In any example of the disclosure, an external spoiler 28 is provided. The external spoiler 28 protrudes beyond the external surface 22. At least in some examples, the external spoiler 28 protrudes outwardly from the external surface 22. At least in some examples, the external spoiler 28 protrudes radially beyond the external surface 22. In any example, the external spoiler 28 is configured to direct air flowing around the nacelle 8 to flow through the air inlet opening 24 and into the flow passage 26 so as to provide cooling air to the heat exchanger 20. In any example of the disclosure, the external spoiler 28 may be configured to increase the volume of air entering the flow passage 26 via the air inlet opening 24. In any example of the disclosure, the external spoiler 28 may be configured to increase the rate of flow of air entering the flow passage 26 via the air inlet opening 24. It will be understood that increasing the volume of air and / or the rate of flow of air through the flow passage 26 will increase the cooling provided by the heat exchanger 20.

In any example of the disclosure, the external spoiler 28 may be shaped so as to catch air flowing over the external surface 22 of the nacelle 8 and to redirect that air into the flow passage 26. In any example of the disclosure, the external spoiler 28 may be configured to minimise an increase in drag exerted on the nacelle 8 due to the external spoiler 28 protruding beyond the external surface. It will be understood therefore that, in some examples, the external spoiler 28 may be configured to be relatively flat relative to the external surface 22 of the nacelle 8. In other words the external spoiler 28 may protrude beyond the external surface by a relatively small amount.

In any example of the disclosure, the nacelle 8 may also include one or more internal spoilers positioned in the flow passage 26. The one or more internal spoilers may be configured to evenly distribute the air flowing across the heat exchanger 20. In any example of the disclosure, the one or more internal spoilers may protrude from a surface of the flow passage 26 into the inner volume of the flow passage 26 so as to engage with fluid flowing through the flow passage 26. In any example of the disclosure, the one or more internal spoilers may extend across the flow passage 26 from a first side to a second side thereof (not shown). It will be understood that any suitable number of internal spoilers could be provided to provide a desired flow of cooling air onto a heat exchanger 20.

In any example of the disclosure, the external spoiler 28 and /or the one or more internal spoilers may be configured to keep flow attached to the internal surfaces of the flow passage 26. In any example of the disclosure, the external spoiler 28 and /or the one or more internal spoilers may be configured to direct cooling air flow onto a heat exchanger 20 so as to improve performance of the heat exchanger.

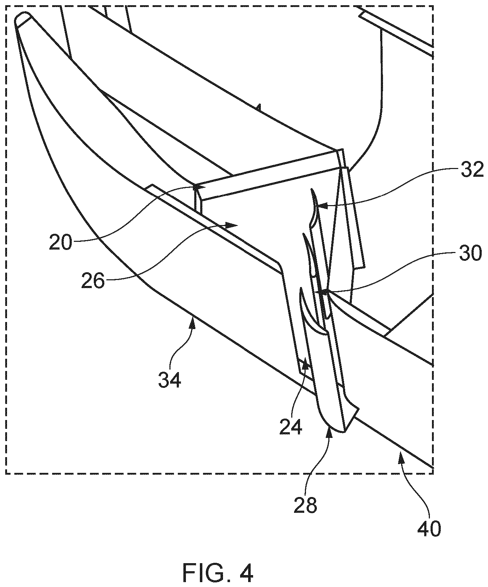

In some examples and as shown in Figures 2 and 4, the nacelle 8 may include a first internal spoiler 30 and a second internal spoiler 32 positioned in the flow passage 26. The first internal spoiler 30 may be positioned closer to the air inlet opening 24 than the second internal spoiler 32. The second internal spoiler 32 may be located closer to the heat exchanger 20 than first internal spoiler 30.

In any example of the disclosure, the nacelle 8 may also include a nacelle door 34 positioned at the air inlet opening 24. The nacelle door 34 can be moveable between an open position and a closed position. The nacelle door 34 can be configured such that an area of the air inlet opening 24 is larger when the nacelle door 34 is in the open position than when the nacelle door 34 is in the closed position. At least in some examples and as seen in the drawings, the nacelle door 34 can be configured to be moved or slid along the external surface 22 of the nacelle 8 so as to move across the air inlet opening 24 to move between the open and closed positions. At least in some examples and as seen in the drawings, the nacelle door 34 can be configured to be substantially flush with the external surface 22 of the nacelle 8.

In any example of the disclosure, the nacelle door 34 can be configured such that the nacelle door 34 does not fully cover the air inlet opening 24 when the nacelle door 34 is in the closed position.

In any example of the disclosure, the external spoiler 28 is configured to provide a sufficient flow of cooling air to the heat exchanger 20 within the flow passage 26 both when the nacelle door 34 is in the closed position and when the nacelle door 34 is in the open position. It will be understood that in any example, the nacelle door 34 may be closed during cruise conditions and may be opened during take-off.

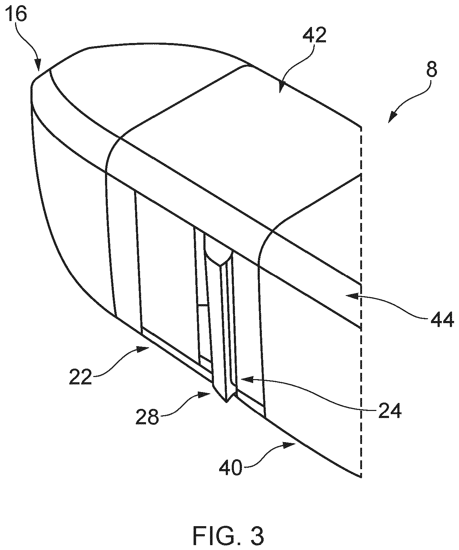

A nacelle 8 according to the disclosure could take many different forms, in some examples having a curved outer surface, for example taking a cylindrical or ellipsoid form. In other examples however and as seen more clearly in Figure 3, which is an isometric view of a longitudinal portion of the nacelle 8 from the rear end 16 towards a midsection thereof, the nacelle 8 may be approximately rectangular or square in cross section. That is, the nacelle 8 may have two sets of parallel walls, each joined together at corners of the nacelle body, wherein the corners are curved. In Figure 3, a first side wall 40 of the nacelle 8 is visible and is joined to a second side wall 42 of the nacelle 8 along a curved edge 44. Although not visible in Figure 3, it will be understood that the first side wall 40 forms a first set of parallel walls with a third side wall of the nacelle 8 and that the second side wall 42 forms a second set of parallel walls with a fourth side wall of the nacelle 8, each two walls being joined along a respective curved edge. It will be understood that in the example shown, the first, second, third and fourth side walls together form the external surface 22 of the nacelle 8.

In various examples and as shown in Figure 2, the nacelle 8 may comprise a first air inlet opening 24 formed in a first surface 40 of the nacelle 8 and a second air inlet opening 24 formed in a second, opposite surface 46 of the nacelle 8. In any example, the first surface could correspond to the first side wall 40 of the nacelle 8 of Figure 3 and the second, opposite surface could correspond to the third side wall (not shown in Figure 3). In such examples, a first flow passage 26 extends from the first air inlet opening 24 diagonally towards the centre and towards the rear end 16 of the nacelle 8. A second flow passage 26 extends from the second air inlet opening 24 diagonally towards the centre and towards the rear end 16 of the nacelle 8. On or before reaching the centre of the nacelle 8, the first and second flow passages 26 change direction to extend straight along the nacelle 8 in an axial direction until they reach the exhaust opening 14, which is located at the rear end 16 of the nacelle 8 in the example shown.

In any example of the disclosure, a respective heat exchanger 20 may be provided in each of the first and second flow passages 26 and may extend across a diagonal section of the flow passage 26 approximately perpendicular to the diagonal direction of the flow passage 26. It will be understood that the surface area of the heat exchanger 20 contacted by the cooling air flowing across it may be increased or maximised using this configuration.

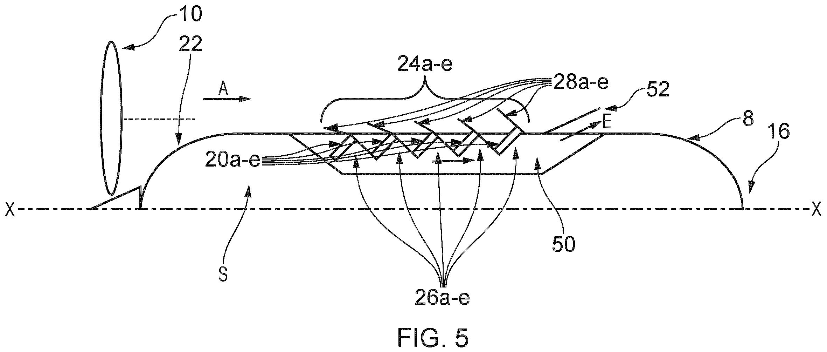

Figure 5 schematically shows a nacelle 8 according to another example of the disclosure. It will be understood that only the part of the nacelle 8 extending above the longitudinal axis X-X is shown in the schematic side section view of Figure 5. Although not shown, further flow passages and their corresponding structure may be provided in the part of the nacelle 8 extending below the longitudinal axis X-X in a manner similar to that of the example of Figure 2.

The nacelle 8 of the example shown has a propeller 10 provided at the front end thereof. As in the previous examples described above, air flows around the nacelle 8 along the external surface 22 thereof. In the example shown however, a plurality (five in the example shown but any desired number could be used) of air flow passages 26a -e are formed within the nacelle 8 which extend into the interior space S from axially adjacent air flow openings 24a- e formed in the external surface 22 of the nacelle 8. Each of the air flow passages 26a -e extends diagonally inwardly towards the centre of the nacelle and towards the rear end 16 thereof such that the air flow passages 26a -e are adjacent to each other and extend parallel to each other. Each of the air flow passages 26a -e then opens into a single air flow passage extension 50 which extends approximately parallel to the longitudinal axis and which may then extend to an air exhaust outlet 52. In any example and as shown in Figure 5, the exhaust outlet 14 can be formed in the external surface 22 of the nacelle 8. In any example and as shown in Figure 5, the exhaust outlet 14 can be located axially beyond the air flow opening(s) 24a- e.

In any example of the disclosure and as shown in Figure 5, a respective external spoiler 28a - e may be provided at each air inlet opening 24a -e. Each of the respective air inlet openings 24a -e, air flow passages 26a -e and external spoilers 28a -e may be configured according to any of the examples above. Further a respective nacelle door (not shown), configured according to any of the examples described above may be provided at each air inlet opening 24a -e or at any air inlet opening as required. Further, one or more internal spoilers (not shown in Figure 5) may be provided in one or more of the air flow passages 26a -e as required.

In any example, a respective heat exchanger 20a -e may be provided in each respective air flow passage 26a -e and may be positioned and oriented as in any of the previous examples described above.

In any example of the disclosure, the axial length of the air inlet opening 24 and / or the dimensions of the flow passage may be determined depending on the desired air flow across the heat exchanger. In a similar manner, the width of the air inlet opening 24 and / or the flow passage may also be determined depending on the desired air flow across the heat exchanger. It will be understood that in any example of the disclosure, the width is defined in a direction extending along the external surface 22 and perpendicular to the longitudinal axis X-X.

It will be understood that in any example of the disclosure, a spoiler (either the external spoiler or an internal spoiler) may be a guide vane. The spoiler may be shaped to provide desired aerodynamic characteristics or performance for a particular aircraft, nacelle, engine and / or power source.

It will be understood that in any example of the disclosure, an outward direction is a direction extending at an angle to (in other words, away from) the longitudinal axis X-X of the nacelle. In any example of the disclosure, an outward direction can be but is not limited to a radial direction.

It will be understood that in any example of the disclosure, substantially or approximately parallel to may mean extending within -30 degrees and +30 degrees of parallel to, or within -20 degrees and +20 degrees of parallel to, or within -10 degrees and +10 degrees of parallel to, or within -5 degrees and +5 degrees of parallel to. It will be understood that in any example of the disclosure, substantially or approximately perpendicular to may mean extending within -30 degrees and +30 degrees of perpendicular to, or within -20 degrees and +20 degrees of perpendicular to, or within -10 degrees and +10 degrees of perpendicular to, or within -5 degrees and +5 degrees of perpendicular to. It will be understood that in any example of the disclosure, extending at an angle to may mean extending at an angle of between 30 degrees and 150 degrees or between 60 degrees and 120 degrees or between 80 degrees and 100 degrees or between 85 degrees and 95 degrees.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure.

For example, it will be understood that any suitable number of air inlet openings and corresponding flow passages housing respective heat exchangers may be provided as required for a particular nacelle design and its cooling requirements.

Additionally, while various examples of the disclosure have been described, it is to be understood that aspects of the disclosure may include only some of the described examples. Accordingly the disclosure is not to be seen as limited by the foregoing description, but is only limited by the scope of the appended claims.

## Claims

1. A nacelle comprising:
an external surface extending from a front end of the nacelle to a rear end of the nacelle;
an air inlet opening in the external surface;
an exhaust opening;
a flow passage extending from the air inlet opening to the exhaust opening;
a heat exchanger positioned in the flow passage; and
an external spoiler protruding beyond the external surface and configured to direct air flowing around the nacelle through the air inlet opening and into the flow passage so as to provide cooling air to the heat exchanger.

2. A nacelle as claimed in claim 1, wherein the external spoiler is configured to provide a sufficient flow of cooling air to the heat exchanger for the required cooling.

3. A nacelle as claimed in claim 1 or 2, comprising one or more internal spoilers positioned in the flow passage.

4. A nacelle as claimed in claim 1, 2 or 3, comprising a nacelle door positioned at the air inlet opening, wherein the nacelle door is moveable between an open position and a closed position.

5. A nacelle as claimed in claim 4, wherein an area of the air inlet opening is larger when the nacelle door is in the open position than when the nacelle door is in the closed position.

6. A nacelle as claimed in claim 4 or 5, wherein the nacelle door does not fully cover the air inlet opening when the nacelle door is in the closed position.

7. A nacelle as claimed in claim 4, 5 or 6, wherein the external spoiler is configured to provide a sufficient flow of cooling air to the heat exchanger both when the nacelle door is in the closed position and when the nacelle door is in the open position.

8. A nacelle as claimed in any preceding claim, wherein the external spoiler is configured to minimise an increase in drag exerted on the nacelle,
wherein, optionally, the external spoiler is configured to cause an increase in drag exerted on the nacelle of less than 10%.

9. A nacelle as claimed in any preceding claim, comprising an engine positioned within the nacelle.

10. A nacelle as claimed in claim 9, wherein the engine is an electric engine.

11. A nacelle as claimed in claim 9 or 10, wherein the heat exchanger is configured to remove heat generated by the engine from the nacelle.

12. A nacelle as claimed in claim 10 or 11, comprising a fuel cell,
wherein the engine is powered by the fuel cell.

13. A nacelle as claimed in claim 12, wherein the heat exchanger is configured to remove heat generated by the fuel cell from the nacelle.

14. A nacelle as claimed in any preceding claim, comprising:
a plurality of the air inlet openings in the external surface;
a plurality of the flow passages, each flow passage extending from a respective air inlet opening to the exhaust opening or to a respective exhaust opening;
a plurality of the external spoilers each configured to direct air flowing around the nacelle through a respective air inlet opening and into the corresponding flow passage; and
a plurality of heat exchangers, each heat exchanger positioned in a respective flow passage.

15. A nacelle as claimed in claim 14, wherein the plurality of air inlet openings are formed in opposite sides of the nacelle; or
wherein the plurality of air inlet openings are axially adjacent to each other.
